# EUROPÄISCHE PATENTSCHRIFT

(11) **EP 3 063 355 B1**
(45) Veröffentlichungstag und Bekanntmachung des Hinweises auf die Patenterteilung: **07.03.2018**
(21) Anmeldenummer: 15777858.0
(22) Anmeldetag: 10.09.2015
(51) Int. Cl.: E06B 3/673

(54) **VERFAHREN UND VORRICHTUNG ZUM FORMEN VON ECKEN IN ABSTANDHALTERN FÜR ISOLIERGLAS**
METHOD AND DEVICE FOR FORMING CORNERS IN SPACERS FOR INSULATING GLASS
PROCÉDÉ ET DISPOSITIF DE FORMATION DE COINS DANS DES INTERCALAIRES DE VITRAGE ISOLANT

(30) Priorität: 20.10.2014 AT 3682014 U
(43) Veröffentlichungstag der Anmeldung: 07.09.2016
(73) Patentinhaber: LISEC Austria GmbH, 3353 Seitenstetten (AT)
(72) Erfinder: MADER, Leopold, 3364 Neuhofen/Ybbs (AT)
(74) Vertreter: Beer & Partner Patentanwälte KG
(86) Internationale Anmeldenummer: PCT/AT2015/000118
(87) Internationale Veröffentlichungsnummer: WO 2016/061595

(56) Entgegenhaltungen:
- EP-A2- 1 018 590
- DE-U1- 8 701 101

## Beschreibung

Die Erfindung betrifft ein Verfahren zum Formen von Ecken in Abstandhaltern für Isolierglas, wobei der Abstandhalter aus einem auf eine Glasscheibe aufgetragenen Strang aus verformbarem Material besteht.

Die Erfindung betrifft weiters eine Vorrichtung, mit welcher das erfindungsgemäße Verfahren in vorteilhafter Weise ausgeführt werden kann.

Beim Herstellen von Isolierglas mit Abstandhaltern aus verformbarem, z.B. thermoplastischem, Material wird beispielsweise so vorgegangen, dass ein Strang aus dem verformbaren Material, der den Abstandhalter bilden soll, auf eine Glasscheibe aufgebracht ("aufgespritzt") wird, wobei der Strang vom Rand der Glasscheibe einen Abstand ("Einstand") aufweist, also gegenüber dem Rand der Glasscheibe nach innen versetzt aufgebracht wird. Nachdem der Strang, der den Abstandhalter bildet, aufgebracht worden ist, werden Anfang und Ende des Stranges miteinander verbunden, beispielsweise indem die einander überlappenden Enden des Stranges verpresst werden.

Nachdem der Abstandhalter aus verformbarem Material geschlossen worden ist, wird eine zweite Glasscheibe aufgesetzt (der Isolierglas-Rohling wird zusammengebaut) und der Isolierglas-Rohling auf Sollmaß verpresst, um die vorgesehene Außendicke (Abstand der Außenflächen der Glasscheiben des Isolierglas-Rohlings voneinander) zu erreichen.

Problematisch ist es, dass die Ecken von derartigen Abstandhaltern nicht scharfkantig, sondern mit mehr oder weniger großen Radien ausgebildet sind. Häufig sind die Ecken von aus in situ gebildeten Strängen aus thermoplastischem Material, welche Abstandhalter für Isolierglas bilden, im Wesentlichen viertelkreisbogenförmig ausgebildet.

Bevorzugt ist es auch aus ästhetischen Gründen, die Ecken in Abstandhaltern aus verformbarem, z.B. thermoplastischem, Material scharfkantig auszubilden, also mit Ecken, die einen sehr kleinen, optisch möglichst nicht wahrnehmbaren Radius haben.

Da die nach außen hin offene Randfuge eines Isolierglas-Rohlinges beim Herstellen von Isolierglas mit Versiegelungsmasse gefüllt wird, ergibt sich das Problem, dass sich bei Ecken mit größerem Radius, also abgerundeten Ecken, die Menge an benötigter Versiegelungsmasse nicht einfach regeln lässt.

Wenn die Ecken im Abstandhalter nicht gerundet, sondern scharfkantig ausgebildet sind, wird im Eckbereich weniger Versiegelungsmasse benötigt.

Isolierglas-Elemente, die scharfkantige Ecken in Abstandhaltern aufweisen, sind auch aus Gründen der Isolierung, insbesondere der Wärmeisolierung (kleinerer Wärmeübergangskoeffizient), vorteilhaft.

Im Stand der Technik sind verschiedene Vorschläge gemacht worden, Ecken in Abstandhaltern aus thermoplastischem Material herzustellen.

So beschreibt die WO 94/06992 A das Ausbilden einer Ecke von vorgefertigten Abstandhaltern aus plastischem Werkstoff, beispielsweise aus Butylkautschuk oder aus Polyisobutylen, wobei die im Bereich einer Ecke liegenden Enden eines vorgefertigten Abstandhalters durch von außen und von innen anzulegende Werkzeuge miteinander verbunden werden, so dass der Abstandhalter geschlossen wird.

Die DE 36 37 561 A befasst sich mit dem Anbringen von vorgefertigten, flexiblen Abstandhaltern auf Glastafeln, wobei vier Einrichtungen vorgesehen sind, mit welchen die Ecken eines Abstandhalters geformt werden können. Mit Hilfe dieser Einrichtungen sollen die Ecken eines im Eckbereich etwa viertelkreisbogenförmig verlaufenden, vorgefertigten Abstandhalters zu einer scharfen Ecke verformt werden. Dazu besitzt jede der Einrichtungen winkelförmige Bauteile, die mit Hilfe von Druckmittelmotoren aufeinander zu und voneinander weg bewegt werden. Einer der winkelförmigen Bauteile legt sich von außen und der andere winkelförmige Bauteil legt sich von innen an den im Eckbereich zu einer scharfen Ecke zu verformenden Abstandhalter an.

Die EP 1 018 590 A befasst sich mit dem in situ Herstellen eines Abstandhalters aus thermoplastischem Kunststoff, wobei ein thermoplastischer Abstandhalter aus einer Düse strangförmig auf eine Glasscheibe aufgetragen wird, während sich die Düse entlang des Randes der Glasscheibe bewegt. Beim Ausbilden von Ecken wird die Düse um eine senkrecht zur Glasscheibe ausgerichtete Achse verschwenkt, wobei die Düse von der Glasscheibe abgehoben wird, sodass der Strang aus Kunststoff, der aus der Düse ausgepresst wird, auf der Glasscheibe nicht anhaftet, während die Düse geschwenkt wird. Die gemäß EP 1 018 590 A2 hergestellten Ecken von Abstandhaltern weisen zwar im Wesentlichen scharfe Innenecken, aber viertelkreisbogenförmig abgerundete Außenecken auf.

Die EP 0 152 807 A betrifft eine im Zuge des Herstellens von Isolierglas eingesetzte Vorrichtung zum Aufbringen eines Abstandhalters aus Kunststoff auf eine stehend ausgerichtete Glasscheibe. Zum Ausbilden von Ecken im Abstandhalter soll die Glasscheibe, auf die der Abstandhalter aufgebracht wird, geschwenkt werden, wobei eine Führungseinrichtung vorgesehen ist, die das Ausbilden von Ecken im Abstandhalter unterstützen soll.

Aus der DE 43 26 179 A ist eine rahmenlose Verglasung mit geklebter Fensterscheibe bekannt. Dabei wird auf eine Fensterscheibe eine einen Abstandhalter bildende Raupe aufgebracht. In dem von zwei einander überlappenden Enden der Raupe gebildeten Eckbereich soll die Ecke mittels eines Pressformwerkzeuges geformt werden.

Die DE 87 01 101 U1 offenbart ein Verfahren zum Formen von wenigstens einer Ecke in Abstandhaltern für Isolierglas, wobei der Abstandhalter aus einem auf die Glasscheibe ausgetragenen Strang aus verformbarem Material besteht.

Bei DE 87 01 101 U1 wird zum Ausbilden der vierten Ecke in einem vorgefertigten Abstandhalter ein über die zu bildende Ecke überstehendes Ende des Abstandhalters von einem als Klemme wirkenden Werkzeug erfasst und von dem Werkzeug um 90° umgebogen. Ein bei der DE 87 01 101 U1 vorgesehener Stempel hat auf das Bilden und Formen der Ecke keinen Einfluss, da er nur im Bereich der Stoßstelle zwischen den Enden des den Abstandhalter bildenden Stranges wirksam wird, nachdem die Ecke gebildet worden ist.

DE 87 01 101 U1 offenbart dabei alle Merkmale des Oberbegriffs des Anspruchs 1. Der Erfindung liegt die Aufgabe zugrunde, ein Verfahren und eine zum Ausführen des Verfahrens geeignete Vorrichtung vorzustellen, mit der im Eckbereich von in situ hergestellten Abstandhaltern von Isolierglas scharfkantige Ecken hergestellt werden können. Gelöst wird diese Aufgabe, soweit das Verfahren betroffen ist, mit den Merkmalen von Anspruch 1.

Insoweit die erfindungsgemäße Vorrichtung betroffen ist, wird die der Erfindung zugrunde liegende Aufgabe mit dem unabhängigen, auf die Vorrichtung gerichteten Anspruch gelöst. Bevorzugte und vorteilhafte Ausgestaltungen der Erfindung sind Gegenstand der Unteransprüche.

Da bei dem erfindungsgemäßen Verfahren und sinngemäß bei der erfindungsgemäßen Vorrichtung Werkzeuge, beispielsweise in Form von Anpresskörpern ausgebildete Werkzeuge, verwendet werden, die an die quer zur Fläche der Glasscheibe stehenden Seitenflächen des in situ aufgebrachten Abstandhalters angelegt werden, können in Abstandhaltern aus verformbarem, z.B. thermoplastischem, Kunststoff scharfkantige Ecken erzeugt werden.

Bei der Erfindung werden Werkzeuge verwendet, die Wirkflächen aufweisen, die zur gewünschten Ausführungsform der Ecke gegengleich geformt sind. Die Wirkflächen des von außen her anzulegenden Werkzeuges sind also ein Negativ der gewünschten Form der Außenecke im Eckbereich von Abstandhaltern.

Auch kann das an der Innenecke anzulegende Werkzeug ist so geformt, dass es Wirkflächen aufweist, die der gewünschten Form der Innenecke entsprechen. Auch hier ist die Form der Wirkflächen des an die Innenseite einer Ecke anzulegenden Werkzeuges gegengleich (negativ) zur gewünschten Form der Innenecke.

Im Rahmen der Erfindung kann vorgesehen sein, dass eine, zwei, drei oder alle (vier) Ecken eines Abstandhalters von Isolierglas gleichzeitig oder nacheinander in die gewünschte Form gebracht werden.

In einer Ausführungsform der Erfindung kann vorgesehen sein, dass ein erstes und/oder ein zweites Werkzeug verwendet werden, die Wirkflächen aufweisen, deren Winkel zueinander veränderbar ist.

In einer Ausführungsform der Erfindung kann vorgesehen sein, dass wenigstens zwei Ecken in dem den Abstandhalter bildenden Strang gleichzeitig geformt werden.

Bei der Erfindung ist vorgesehen, dass das erste und das zweite Werkzeug zum Formen der Ecke gleichzeitig an den den Abstandhalter bildenden Strang angelegt werden.

In einer Ausführungsform der Erfindung kann vorgesehen sein, dass beim Formen der Ecke in der freien, von der Glasscheibe abgewendeten Fläche des den Abstandhalter bildenden Stranges wenigstens eine Vertiefung erzeugt wird.

In einer Ausführungsform der Erfindung kann vorgesehen sein, dass die Vertiefung gleichzeitig mit dem Formen der Ecke erzeugt wird.

Weitere Einzelheiten und Merkmale der Erfindung ergeben sich aus der nachstehenden Beschreibung unter Bezugnahme auf die angeschlossenen schematischen Zeichnungen. Es zeigt:
- Fig. 1: eine erste Ausführungsform von Werkzeugen zum Formen einer Ecke,
- Fig. 2: eine Ausführungsform von Werkzeugen zum Formen einer spitzwinkeligen Ecke,
- Fig. 3: eine Ausführungsform von Werkzeugen, die Wirkflächen aufweisen, deren Winkel zueinander verstellbar ist,
- Fig. 4: eine weitere Ausführungsform von Werkzeugen,
- Fig. 5: eine weitere Ausführungsform von Werkzeugen zum Ausführen des erfindungsgemäßen Verfahrens und
- Fig. 6: eine Variante des Verfahrens zum Auftragen von Strängen aus verformbarer, z.B. thermoplastischer, Masse.

Beim Ausführen des erfindungsgemäßen Verfahrens wird ein Strang 1 aus bevorzugt thermoplastischem Material in situ aus einer Düse auf eine Glasscheibe extrudiert, um auf der Glasscheibe einen rahmenförmigen Abstandhalter für Isolierglas aufzubringen. Durch Regeln des Abstandes der Düse, aus welcher der Strang 1 aus thermoplastischem Material auf die Glasscheibe aufgebracht wird, von der Glasscheibe, wird bevorzugt dafür gesorgt, dass der Strang 1 im Eckbereich 2 an der Glasscheibe nicht, oder wenigstens weniger als in anderen Bereichen, haftet, sodass im Eckbereich 2 vor Verpressen der Ecke des Abstandhalters ein Verformen des Stranges 1 im Eckbereich 2 möglich ist.

Das Formen einer scharfkantigen Ecke im Abstandhalter, der von dem Strang 1 gebildet wird, in einem Eckbereich 2 erfolgt durch ein an der Außenseite des den Abstandhalter bildenden Stranges 1 im Eckbereich 2 am Außeneck 3 angreifendes erstes Werkzeug 5 und ein am Inneneck 4 angreifendes zweites Werkzeug 6. Die Werkzeuge 5 und 6 sind insbesondere Anpresskörper, die im Eckbereich 2 durch Zustellbewegungen der Werkzeuge 5 und 6 mit Druck an den Strang 1 angelegt werden, um diesen aus einem abgerundeten Eck in ein Eck mit scharfen Kanten des Außenecks 3 und des Innenecks 4 zu formen.

Die Zustellbewegung der Werkzeuge 5 und 6 kann parallel zur Glasscheibe oder unter einem (spitzen) Winkel zur Glasscheibe verlaufen.

Die Werkzeuge 5 und 6 werden gleichzeitig im Eckbereich 2 zum Strang 1 hin bewegt werden.

Da die Werkzeuge 5 und 6 beim Zustellen auf den Strang 1 auf der Glasscheibe gleiten, ist es bevorzugt, die auf der Glasscheibe gleitende Fläche der Werkzeuge 5 und 6 mit einer Beschichtung zu versehen, die das Gleiten vereinfacht und eine geringere Härte als Glas aufweist. Anstelle einer Beschichtung können die Werkzeuge 5 und 6 aus einem Werkstoff, der die vorgenannten Eigenschaften aufweist, gefertigt sein.

Die Wirkflächen 7 und 8 der Werkzeuge 5 und 6, die im Eckbereich 2 am Außeneck 3 und am Inneneck 4 angelegt werden, sind bevorzugt mit Beschichtungen versehen, die im Bezug auf das Material, aus dem der Strang 1 besteht, Antihafteigenschaften aufweisen. Alternativ können die Werkzeuge 5 und 6 aus einem derartigen Werkstoff gefertigt sein, in welchem Fall Beschichtungen entbehrlich sind.

Den Werkzeugen 5 und 6, oder wenigstens einem derselben, kann eine, beispielsweise elektrische, Heizung zugeordnet sein, oder wenigstens eines der Werkzeuge 5 und 6 wird vorgewärmt, um das Verpressen des Stranges 1 im Eckbereich 2, um ein scharfkantiges Außeneck 3 und ein scharfkantiges Inneneck 4 zu bilden, durch Erwärmen des Materials des Stranges 1 zu erleichtern.

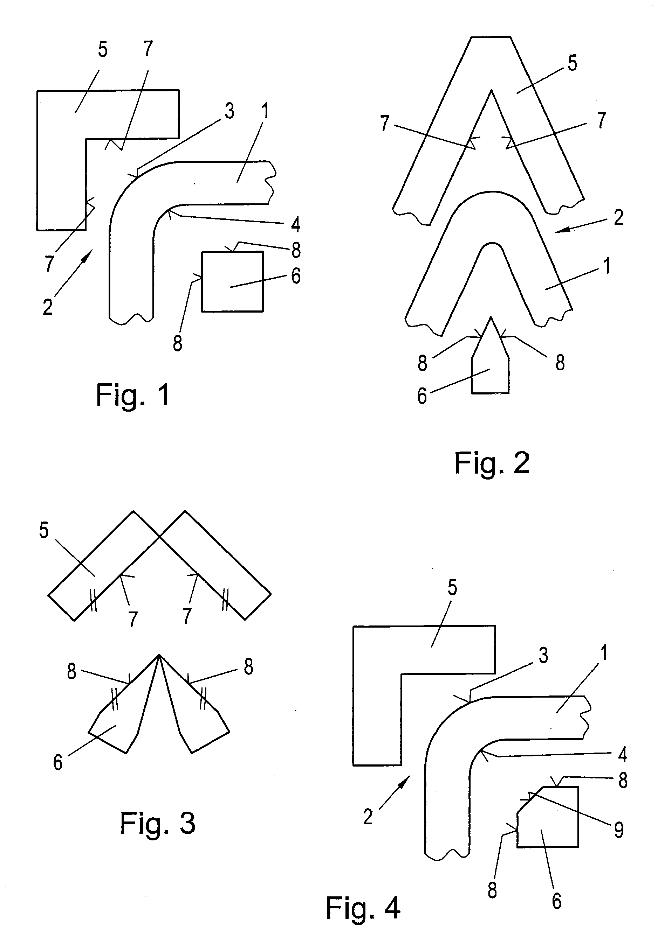

Die in Fig. 1 gezeigten Ausführungsbeispiele der Werkzeuge 5 und 6 dienen zum Erzeugen rechtwinkeliger Ecken und besitzen daher Wirkflächen 7 und 8, die zueinander unter einem Winkel von 90° stehen, wie dies in Fig. 1 gezeigt ist.

Wenn in Eckbereichen 2, in denen die zur Ecke führenden Stränge 1 unter einem von 90° abweichenden Winkel stehen, scharfe Ecken auszubilden sind, können Werkzeuge 5 und 6 verwendet werden, wie sie in Fig. 2 gezeigt sind. In diesem Fall haben die Wirkflächen 7 und 8 der Werkzeuge 5 und 6 zueinander einen Winkel, der dem Winkel der zu erzeugenden Ecke entspricht.

Fig. 3 zeigt eine Ausführungsform von Werkzeugen 5 und 6, deren Wirkflächen 7 und 8 zueinander verstellbar sind, sodass der Winkel, den die Wirkflächen 7 des Werkzeuges 5 und die Wirkflächen 8 des Werkzeuges 6 miteinander einschließen, auf den jeweils gewünschten, nämlich den der Ecke entsprechenden Winkel eingestellt werden können.

In einer Ausführungsform der Erfindung, die in Fig. 4 gezeigt ist, wird im Bereich der Innenecke 4 im Eckbereich 2 des Stranges 1 eine Flachkehle ausgebildet. In diesem Fall grenzen die Wirkflächen 8 des zweiten Werkzeuges 6, das im Bereich des Innenecks 4 an einen Strang 1 anzulegen ist, nicht scharfkantig, sondern mit einer Übergangsfläche 9 aneinander.

Mit Bezug auf Fig. 4 ist festzuhalten, dass sowohl an der Innenecke 4 als auch an der Außenecke 3 auch andere scharfkantige Formen erzeugt werden können, indem entsprechend geformte Werkzeuge 5 und 6 verwendet werden. So ist es beispielsweise möglich, durch Verwenden entsprechender Werkzeuge 5 Innenecken 4 zu erzeugen, die als Alternative zur Flachkehle von Fig. 4 eine Hohlkehle aufweisen oder eine andere konkave Form besitzen. In gleicher Weise kann das Außeneck 3 eine Fase aufweisen oder eine andere konvexe Form besitzen.

Im Rahmen der Erfindung ist in Betracht gezogen, zum Verformen der vier Eckbereiche 2 eines viereckigen Abstandhalters vier Vorrichtungen, bestehend aus je einem ersten Werkzeug 5 und einem zweiten Werkzeug 6, vorzusehen. In diesem Fall können alle Ecken eines Abstandhalters aus einem Strang 1 gleichzeitig verformt werden, nachdem der den Abstandhalter bildende Strang 1 vollständig auf die Glasscheibe aufgebracht worden ist.

Im Fall von Isolierglas mit weniger als vier oder mehr als vier Ecken können Anordnungen aus einem ersten Werkzeug 5 und einem zweiten Werkzeug 6 entsprechend der Anzahl der Ecken vorgesehen werden, um alle Ecken in derartigen Abstandhaltern gleichzeitig in der gewünschten Weise zu verformen.

Im Rahmen der Erfindung ist alternativ in Betracht gezogen, zwei jeweils ein erstes Werkzeug 5 und ein zweites Werkzeug 6 umfassende Anordnungen vorzusehen, um gleichzeitig je zwei benachbarte Eckbereiche 2 eines aus einem Strang 1 gebildeten Abstandhalters zu scharfkantigen Ecken zu verformen.

Diese Ausführungsform ist vorteilhaft, wenn die Bewegung zwischen der Düse, aus welcher der Strang 1 auf eine Glasscheibe aufgebracht wird, so erfolgt, dass die Glasscheibe in eine Richtung (x-Richtung) bewegt wird, während die Düse für das Auftragen des Stranges 1 aktiv in eine zur x-Richtung normale Richtung (y-Richtung) bewegt wird. In diesem Fall kann das Verformen des Stranges 1 in zwei Eckbereichen 2, deren Positionen in y-Richtung übereinstimmen, gleichzeitig und zu einem Zeitpunkt, zu dem der den Abstandhalter bildende Strang 1 noch nicht vollständig aufgebracht worden ist, ausgeführt werden.

In einer einfachen Ausführungsform ist lediglich eine Anordnung aus einem ersten Werkzeug 5 und einem zweiten Werkzeug 6 vorgesehen, die nacheinander alle Eckbereiche 2 eines Abstandhalters aus einem Strang 1 verformt, wobei das Verformen der Eckbereiche 2 des Stranges 1 nacheinander ausgeführt wird. Beispielsweise erlaubt es diese Ausführungsform, das Bewegen der Anordnung aus den Werkzeugen 5 und 6 so zu steuern, dass sie der Düse, aus welcher der Strang 1 auf eine Glasscheibe aufgebracht wird, folgt, also, bezogen auf die Richtung, in welche die Düse bewegt wird, hinter dieser bewegt wird.

In einer Ausführungsform der Erfindung ist in Betracht gezogen, die Werkzeuge 5 und 6 wenigstens teilweise mit einer Düse zu kombinieren, aus welcher ein Strang 1 auf eine Glasscheibe aufgebracht wird. Bei dieser Ausführungsform kann das Verformen in Eckbereichen 2 des Stranges 1 gleichzeitig mit dem Auftragen des Stranges 1 ausgeführt werden.

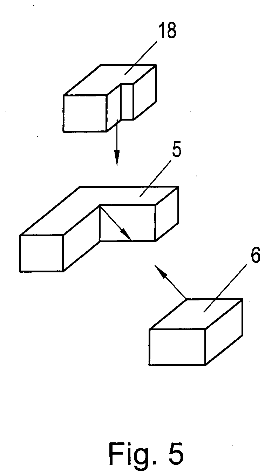

Eine mögliche Ausführungsform dieser Art ist in Fig. 5 gezeigt.

Eine Düse 10, die in Fig. 5 im Aufriss gezeigt ist, umfasst einen längeren Schenkel 11 und einen kürzeren (dickeren) Schenkel 12. Der Überstand des längeren Schenkels 11 gegenüber dem kürzeren Schenkel 12 entspricht dem Abstand der Wirkfläche 13 des langen Schenkels 11 von der Wirkfläche 14 des kürzeren Schenkels 12.

Zusätzlich ist an der Düse 10 eine Kante 16 verwirklicht, die zwischen der Wirkfläche 14 des kurzen Schenkels 12 und der Stirnfläche 15 des kurzen Schenkels 12 liegt.

Im Rahmen der Erfindung ist auch in Betracht gezogen, einen weiteren Niederhaltekörper 18 (Fig. 5) zu verwenden, der auf der der Glasscheibe gegenüberliegenden, freien Fläche des Stranges 1 angelegt wird, um zu verhindern, dass beim Wirksamwerden der Werkzeuge 5 und 6 oder beim Verschwenken der Düse 10 unerwünschte Verformungen des Stranges 1 dadurch auftreten, dass Werkstoff des Stranges 1 von der Glasscheibe weg verdrängt wird.

Wenn ein Niederhaltekörper 18 im Eckbereich 2 angelegt wird, ist der Eckbereich 2, in dem das Formen des Eckbereiches 2 zu einer scharfkantigen Ecke erfolgt, nach allen Seiten hin abgedeckt, sodass unerwünschtes Verformen des Stranges 1 vermieden ist. Es ist nämlich in diesem Fall der Strang 1 nicht nur durch die Glasscheibe und die Werkzeuge 5 und 6, sondern auch durch den Niederhaltekörper 18 abgedeckt. Ein Verformen des Stranges 1 in Richtung des Stranges selbst wird durch den Rückstau von aus der Düse 10 austretendem Material des Stranges 1 verhindert.

Wenn die Stoßstellen zwischen den Enden eines Stranges 1 aus verformbarem, insbesondere thermoplastischem, Material in einem Eckbereich 2 zu liegen kommen, können die Enden des Stranges 1 durch Verpressen dicht miteinander verbunden werden.

Bei dieser Ausführungsform und bei allen anderen Ausführungsformen des erfindungsgemäßen Verfahrens kann gleichzeitig mit dem Formen des Eckbereiches 2 in die von der Glasscheibe, auf welcher der Strang 1 aufgebracht worden ist, abgekehrte Fläche des Stranges 1 wenigstens eine Vertiefung eingeformt werden (beispielsweise durch den Niederhaltekörper 18), sodass beim Verpressen des Isolierglas-Rohlinges auf das Sollmaß im Inneren des Isolierglas-Rohlinges kein Überdruck entstehen kann.

Wenn Isolierglas aus drei Glasscheiben herzustellen ist, besteht im Rahmen der Erfindung die Möglichkeit, auf beide Seiten der mittleren Glasscheibe aufgetragene Stränge 1, die Abstandhalter bilden, gleichzeitig oder nacheinander in Eckbereichen 2 zu scharfkantigen Ecken zu verformen, indem das erfindungsgemäße Verfahren und die erfindungsgemäße Vorrichtung angewendet werden.

Auch wenn aus Taktzeitgründen mehrere Glasscheiben gleichzeitig in synchron arbeitenden Situationen mit Strängen 1, die Abstandhalter bilden, belegt werden, kann das erfindungsgemäße Verfahren zum Formen von scharfkantigen Ecken im Eckbereich 2 angewendet werden.

In gleicher Weise kann es aus Taktzeitgründen vorteilhaft sein, den Abstandhalter nicht durch einen durchgehenden Strang 1 aus verformbarem Material aufzubringen, sondern den Abstandhalter aus mehreren Abschnitten von Strängen 1 zu bilden. In diesem Fall kann vorgesehen sein, dass die Eckbereiche 2 derartiger Abstandhalter nach dem erfindungsgemäßen Verfahren und mit Hilfe der erfindungsgemäßen Vorrichtung zu scharfkantigen Ecken verformt werden.

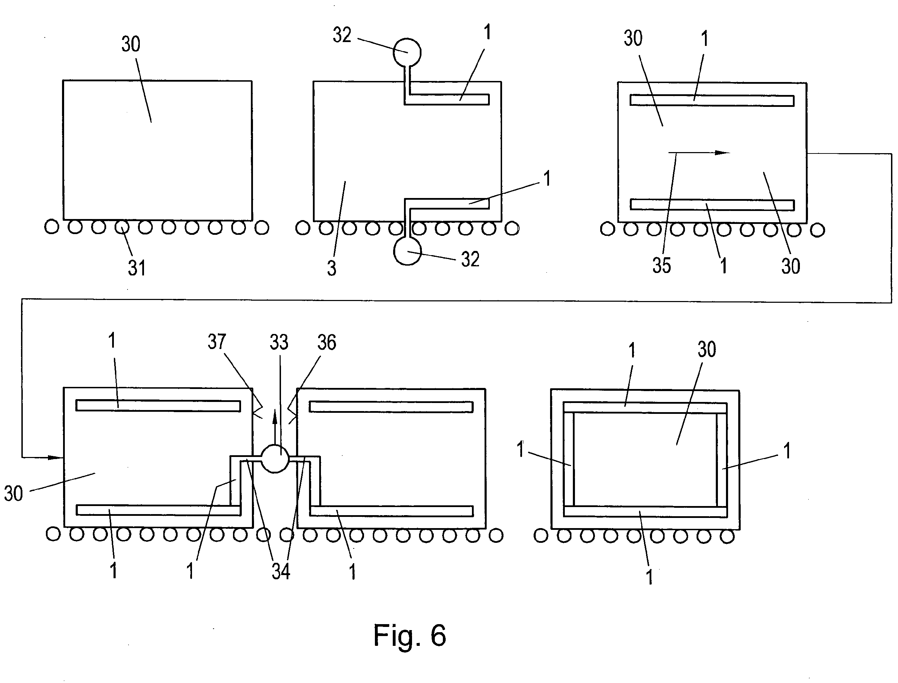

Das in Fig. 6 schematisch veranschaulichte Verfahren zum Auftragen von Strängen 1 aus verformbarer, z.B. thermoplastischer, Masse auf eine Glasscheibe 3 erlaubt es, beim Ausformen der Ecken scharfkantige Ecken zu erhalten und auch Abschnitte des Stranges 1, der den Abstandhalter für Isolierglas bilden wird, miteinander dicht zu verbinden, indem das erfindungsgemäße Verfahren und/oder die erfindungsgemäß vorgeschlagenen Werkzeuge angewendet werden.

Bei dem in Fig. 6 gezeigten Verfahren werden Glasscheiben 30 (Glaszuschnitte) aus einer vorgelagerten Bearbeitungsmaschine, z.B. einer Waschmaschine, auf einer Fördereinrichtung 31 in den Bereich einer Linie zum Herstellen von Isolierglas gefördert, in dem Stränge 1 aus verformbarem, z.B. thermoplastischem, Material, die Abstandhalter bilden sollen, auf Glasscheiben 30 aufgetragen werden. In einem ersten Schritt werden zwei horizontale Stränge 1 aufgetragen, indem die Glasscheibe 30 relativ zu zwei Düsen 32 zum Auftragen von Strängen 1 aus thermoplastischem Material bewegt wird.

In einem zweiten und dritten Schritt werden vertikale Stränge 1 aufgetragen, wozu eine Düse 33 mit zwei Ausgängen 34 (Düsenöffnungen), aus denen Stränge 1 auf Glasscheiben 30 aufgetragen werden, verwendet wird. Dies erlaubt es, wie in Fig. 10 gezeigt, an zwei aufeinander folgenden Glasscheiben 30 Stränge 1 aufzutragen, wobei ein Strang 1 im Bereich eines lotrechten, bezogen auf die Förderrichtung (Pfeil 35) hinteren Randes 36 der vorderen Glasscheibe 30 und ein zweiter Strang 1 im Bereich eines lotrechten, bezogen auf die Förderrichtung vorderen Randes 37 der nächsten Glasscheibe 30 aufgetragen wird.

Während des Auftragens der Stränge 1 im Bereich lotrechter Ränder 36 und 37 stehen die Glasscheiben 30 wenigstens in der Richtung, in der die Düse 33 bewegt wird, still und werden weiter transportiert, wenn Stränge 1 im Bereich aller vier Ränder einer Glasscheibe 30 aufgetragen sind, wie dies in Fig. 10 ganz rechts gezeigt ist.

In einzelnen Abschnitten der Station von Fig. 10 zum Aufbringen von Abstandhalter bildenden Strängen 1 auf Glasscheiben 30 sind Puffer- bzw. Beschleunigungsstrecken vorgesehen, damit eine insgesamt für die geforderten Taktzeiten ausreichend hohe Transportgeschwindigkeit gewährleistet ist.

Es besteht aber auch die Möglichkeit, die Düse 30, aus der die lotrechten Stränge 1 aufgetragen werden, in Förderrichtung (Pfeil 35) zu bewegen, während sie Stränge 1 aufträgt.

Die einzelnen Abschnitte der Stränge 1 auf einer Glasscheibe 30 werden verpresst, wozu die erfindungsgemäß vorgeschlagenen Werkzeuge unter Anwendung des erfindungsgemäßen Verfahrens eingesetzt werden können.

In einer abgeänderten Ausführungsform besteht die Möglichkeit, Ecken zu verpressen, um scharfkantige Ecken zu bilden und die Abschnitte der Stränge miteinander dicht zu verbinden, während die Düse 33 mit zwei Ausgängen 34 tätig ist oder kurz nachdem eine Stoßstelle erzeugt wurde.

## Patentansprüche

1. Verfahren zum Formen von wenigstens einer Ecke in Abstandhaltern für Isolierglas, wobei der Abstandhalter aus einem auf die Glasscheibe ausgetragenen Strang (1) aus verformbarem Material besteht, umfassend das Anlegen eines ersten Werkzeuges (5) an die Außenseite des Stranges (1) im Bereich (2) einer Ecke desselben, das Anlegen eines zweiten Werkzeuges (6) an die Innenseite des Stranges (1) im Bereich (2) der Ecke und das Ausüben von Druck auf die zur Fläche der Glasscheibe im Wesentlichen senkrecht stehenden Seitenflächen des den Abstandhalter bildenden Stranges (1) mit Hilfe der Werkzeuge (5 und 6), **dadurch gekennzeichnet, dass** die Ecken in einem in situ gebildeten Strang (1) geformt werden, dass ein erstes Werkzeug (5) verwendet wird, dessen dem Abstandhalter zugewendete Wirkflächen (7) der Negativform der Außenecke (3) im Abstandhalter entspricht, dass ein erstes Werkzeug (5) verwendet wird, das zum Formen der Außenecke (3) im den Abstandhalter bildenden Strang (1) mit zwei zueinander im Winkel stehenden Wirkflächen (7) an dem den Abstandhalter bildenden Strang (1) angelegt wird, dass ein zweites Werkzeug (6) verwendet wird, dessen dem Abstandhalter zugewendete Fläche der Negativform der Innenecke (4) im Abstandhalter entspricht, dass ein zweites Werkzeug (6) verwendet wird, das zum Formen der Innenecke (4) im den Abstandhalter bildenden Strang mit zwei zueinander im Winkel stehenden Wirkflächen (8) an dem den Abstandhalter bildenden Strang (1) angelegt wird, dass das erste Werkzeug (5) und das zweite Werkzeug (6) gleichzeitig an den Strang (1) angelegt werden, dass auf die von der Glasscheibe abgewendete Fläche des den Abstandhalter bildenden Stranges (1) während des Formens der Ecke Druck ausgeübt wird und dass Druck mit Hilfe eines Niederhaltekörpers (18) ausgeübt wird, dessen Wirkfläche zur Fläche der Glasscheibe im Wesentlichen parallel ausgerichtet ist.

2. Verfahren nach Anspruch 1, **dadurch gekennzeichnet, dass** zum Formen der Ecke als Anpresskörper ausgebildete Werkzeuge (5, 6) verwendet werden.

3. Verfahren nach Anspruch 1 oder 2, **dadurch gekennzeichnet, dass** ein erstes und/oder ein zweites Werkzeug (5, 6) verwendet wird, das an der Düse (10) angeordnet ist, die zum Auftragen des einen Abstandhalter bildenden Stranges (1) auf eine Glasscheibe verwendet wird.

4. Verfahren nach einem der Ansprüche 1 bis 3, **dadurch gekennzeichnet, dass** die Ecke geformt wird, bevor noch der den Abstandhalter bildende Strang (1) mit der Glasscheibe in Haftverbindung steht.

## Claims

1. Method for forming at least one corner in spacers for insulating glass, whereby the spacer consists of a strand (1) made of deformable material, applied to the glass pane, comprising the placing of a first tool (5) on the outside of the strand (1) in the area (2) of a corner thereof, the placing of a second tool (6) on the inside of the strand (1) in the area (2) of the corner and the exerting of pressure on the lateral surfaces, which are essentially perpendicular to the surface of the glass pane, of the spacer-forming strand (1) using the tools (5 and 6), **characterized in that** the corners are formed in a strand (1) formed in situ, that a first tool (5) is used, whose effective surfaces (7) near to the spacer correspond to the negative shape of the outer corner (3) in the spacer, that a first tool (5) is used, which is placed on the spacer-forming strand (1) for forming the outer corner (3) in the spacer-forming strand (1) with two effective surfaces (7) that are at an angle to one another, **in that** a second tool (6) is used, whose surface near the spacer corresponds to the negative shape of the inner corner (4) in the spacer, that a second tool (6) is used, which is placed on the spacer-forming strand (1) to form the inner corner (4) in the spacer-forming strand with two effective surfaces (8) that are at an angle to one another, that the first tool (5) and the second tool (6) are placed on the strand (1) simultaneously, that pressure is exerted on the surface, facing away from the glass pane, of the spacer-forming strand (1) during the forming of the corners, and that pressure is exerted using a hold-down element (18), whose effective surface is oriented essentially parallel to the surface of the glass pane.

2. Method according to claim 1, **characterized in that** tools (5, 6) designed as pressing bodies are used for forming the corners.

3. Method according to claim 1 or 2, **characterized in that** a first tool and/or a second tool (5, 6) is used, which is arranged on the nozzle (10), which is used to apply a spacer-forming strand (1) on a glass pane.

4. Method according to one of claims 1 to 3, **characterized in that** the corner is formed even before the spacer-forming strand (1) is adhesively connected to the glass pane.

## Revendications

1. Procédé pour former au moins un coin dans des entretoises pour vitrage isolant, l'entretoise étant constituée d'un boudin (1) en matériau déformable appliqué sur la vitre, comprennent à appliquer un premier outil (5) sur le côté extérieur du boudin (1) dans la zone (2) d'un coin de celui-ci, à appliquer un deuxième outil (6) sur le côté intérieur du boudin (1) dans la zone (2) du coin et à exercer une pression sur les surfaces latérales, sensiblement perpendiculaires à la surface de la vitre, du boudin (1) formant l'entretoise à l'aide des outils (5 et 6), **caractérisé en ce que** les coins sont formés dans un boudin (1) formé in situ, qu'un premier outil (5) est utilisé, dont les surfaces actives (7) tournées vers l'entretoise correspondent à la forme négative du coin extérieur (3) dans l'entretoise, qu'un premier outil (5) est utilisé qui, pour former le coin extérieur (3) dans le boudin (1) formant l'entretoise, est appliqué sur le boudin (1) formant l'entretoise avec deux surfaces actives (7) formant entre elles un angle, qu'un deuxième outil (6) est utilisé, dont la surface tournée vers l'entretoise correspond à la forme négative du coin intérieur (4) dans l'entretoise, qu'un deuxième outil (6) est utilisé qui, pour former le coin intérieur (4) dans le boudin formant l'entretoise est appliqué sur le boudin (1) formant l'entretoise avec deux surfaces actives (8) formant entre elles un angle, que le premier outil (5) et le deuxième outil (6) sont appliqués en même temps sur le boudin (1), qu'une pression est exercée sur la surface du boudin (1) formant l'entretoise éloignée de la vitre pendant le formage du coin et que la pression est exercée à l'aide d'un corps d'appui (18) dont la surface active est orientée sensiblement parallèlement à la surface de la vitre.

2. Procédé selon la revendication 1, **caractérisé en ce que** pour former le coin, on utilise des outils (5, 6) réalisés sous la forme de corps de pression.

3. Procédé selon la revendication 1 ou 2, **caractérisé en ce qu'**un premier et/ou un deuxième outil (5, 6) est utilisé, qui est disposé sur la buse (10) servant à appliquer le boudin (1) formant l'entretoise sur une vitre.

4. Procédé selon l'une des revendications 1 à 3, **caractérisé en ce que** le coin est formé avant même que le boudin (1) formant l'entretoise ne soit en liaison adhésive avec la vitre.
